# EUROPÄISCHE PATENTANMELDUNG

(11) **EP 1 609 506 A1**
(43) Veröffentlichungstag der Anmeldung: **28.12.2005**
(21) Anmeldenummer: 05012479.1
(22) Anmeldetag: 10.06.2005
(51) Int. Cl.: A62B 18/08, B64D 11/00

(54) **Passagiersauerstoffmaske**

(30) Priorität: 23.06.2004 DE 102004030336
(71) Anmelder: Dräger Aerospace GmbH, 23560 Lübeck (DE)
(72) Erfinder: Rittner, Wolfgang, 23623 Ahrensbök/OT Siblin (DE); Meckes, Rüdiger, 23919 Berkenthin (DE)
(74) Vertreter: Vollmann, Heiko

(57) **Zusammenfassung**

Passagiersauerstoffmaske (2) für ein Flugzeug, mit einem zur Anlage an das Gesicht bestimmten und in bestimmungsgemäßer Position Mund und Nase übergreifenden Maskenkörper (4) und einer Durchführung (16) für ein Trinkrohr (18).

## Beschreibung

Die Erfindung betrifft eine Passagiersauerstoffmaske für ein Flugzeug mit den im Oberbegriff des Anspruchs 1 angegebenen Merkmalen.

Nach einem Dekompressionsvorfall an Bord eines Passagierflugzeugs ist es aus Sicherheitsgründen üblich, das Flugzeug auf eine Höhe abzusenken, die ein Atmen ohne zusätzliche Sauerstoffversorgung ermöglicht. Abhängig von der Flugroute und dem Ort des Dekompressionsvorfalls kann der Weg bis zu dem Zielflughafen bzw. zu einem Ausweichflughafen erheblich sein, so dass die geringere Flughöhe zu einem deutlich höheren Verbrauch von Treibstoff führt, der aus diesem Grund vorsorglich an Bord der Maschine mitgeführt wird, was eine entsprechend große Gewichtsbelastung und damit verbundene Einschränkung der Ladekapazität des Flugzeugs bedeutet.

Daher wird es angestrebt, im Falle einer Dekompression nur noch auf eine bezüglich des zusätzlichen Treibstoffverbrauchs erträgliche Höhe abzusinken und die Passagiere während der verbleibenden Flugdauer über Passagiersauerstoffmaske mit zusätzlichem Sauerstoff zu versorgen.

Dieser Sauerstoff weist nahezu keine Wasserbeladung auf, was die Austrocknung des Körpers insbesondere bei einer länger andauernden Benutzung der Passagiersauerstoffmaske beschleunigt. Wird der Flüssigkeitsverlust nicht durch die Aufnahme von Flüssigkeit ausgeglichen, kann der Blutdruck und damit einhergehend die Geschwindigkeit der Blutzirkulation sinken, wodurch sich beispielsweise das Risiko eines zu einer Thrombose führenden Blutgerinnsels erhöht. Die Passagiere sollten daher pro Flugstunde mindestens ein Glas Flüssigkeit zu sich nehmen.

Dies ist bei Gebrauch der bekannten Passagiersauerstoffmasken nur schwer, wenn überhaupt möglich, da die Masken zum Trinken abgesetzt werden müssten.

Vor diesem Hintergrund liegt der vorliegenden Erfindung die Aufgabe zugrunde, eine Passagiersauerstoffmaske zu schaffen, welche eine ausreichende Sauerstoffversorgung des Passagiers sicherstellt und dabei eine einfache Flüssigkeitsaufnahme ermöglicht.

Die erfindungsgemäße Lösung dieser Aufgabe ist eine Passagiersauerstoffmaske für ein Flugzeug mit den im Anspruch 1 angegebenen Merkmalen. Vorteilhafte Weiterbildungen der Erfindung ergeben sich aus den Unteransprüchen, der nachfolgenden Beschreibung und der Zeichnung.

Die erfindungsgemäße Passagiersauerstoffmaske für ein Flugzeug weist einen zur Anlage an das Gesicht bestimmten und in bestimmungsgemäßer Position Mund und Nase übergreifenden Maskenkörper auf. An der Passagiersauerstoffmaske ist eine Durchführung für ein Trinkrohr vorgesehen, mit dem Flüssigkeit aus einem Becher oder einer Flasche aufnehmbar ist, ohne die Maske abnehmen zu müssen.

Der Maskenkörper der Passagiersauerstoffmaske ist in bekannter Weise kegelstumpfförmig ausgebildet und besteht aus einem elastischen Kunststoff. Die größere der beiden Stirnflächen des Maskenkörpers ist offen und bildet eine Atemöffnung der Sauerstoffmaske, die der Passagier Mund und Nase überdeckend an sein Gesicht anlegt. Die von der Atemöffnung beabstandete zweite Stirnfläche des Maskenkörpers ist geschlossen ausgebildet. An dieser geschlossenen Stirnfläche ist üblicherweise die Sauerstoffversorgung an den Maskenkörper angebunden.

Bevorzugt im Bereich dieser geschlossenen Stirnfläche ist eine Durchführung vorgesehen, durch die ein Trinkrohr in das Innere des Maskenkörpers einführbar ist, so dass der Passagier bei anliegender Passagiersauerstoffmaske über das durch die Durchführung in das Maskeninnere geführte Trinkrohr Getränke zu sich nehmen kann.

Alternativ kann die Durchführung für das Trinkrohr aber auch an jeder anderen Stelle der Passagiersauerstoffmaske angeordnet sein, allerdings sollte die Position der Durchführung gewährleisten, dass der Passagier das Trinkrohr in seinen Mund einführen kann und eine bequeme Flüssigkeitsaufnahme durch das Trinkrohr möglich ist. So ist beispielsweise auch eine Ausführungsform der Passagiersauerstoffmaske denkbar, bei der die Durchführung für das Trinkrohr an der Mantelfläche des Maskenkörpers, vorzugsweise nahe der die Sauerstoffanbindung beinhaltenden Stirnfläche, angeordnet ist.

Vorteilhaft ist die Durchführung durch eine Öffnung gebildet. Die Abmessungen und die Querschnittsform dieser Öffnung sind zweckmäßigerweise den Außenabmessungen und der Querschnittskontur des Trinkrohres angepasst. Auf diese Weise kann bei penetrierter Öffnung der Zwischenraum zwischen dem Trinkrohr und dem Öffnungsrand der Durchführung möglichst klein gestaltet werden und so das Eindringen von Außenluft in den Maskenkörper verhindert werden.

Bevorzugt ist die Öffnung rund ausgebildet und weist einen Durchmesser auf, welcher im Wesentlichen dem Durchmesser gängiger Trinkhalme entspricht, so dass diese als Trinkrohr für die Passagiersauerstoffmaske Verwendung finden können.

Um dem Passagier bei aufgesetzter Maske das Einführen des Trinkrohrs in die Öffnung zu erleichtern, ist es von Vorteil, an dem außenseitigen Rand der Öffnung eine leichte Überhöhung, z. B. in Form einer den Öffnungsrand umgebenden wulstförmigen Materialverdickung, anzuordnen. Diese Erhöhung ermöglicht ein Ertasten der Öffnung und damit das Durchführen des Trinkrohrs durch diese Öffnung. Ist die Öffnung zur Durchführung eines Trinkrohrs an der flexiblen Mantelfläche des Maskenkörpers vorgesehen, kann die Überhöhung des Öffnungsrandes ferner mit einer Materialversteifung einhergehen, was das Durchführen des Trinkrohrs zusätzlich erleichtert.

Zweckmäßigerweise ist die Öffnung selbsttätig schließend ausgebildet. Um das Eindringen von Außenluft in den Maskenkörper zu verhindern, ist es erforderlich, dass die Öffnung für das Durchführen des Trinkrohrs nach dem Entfernen des Trinkrohrs luftdicht verschlossen ist. Daher ist an der Öffnung, vorzugsweise an dessen dem Gesicht des Benutzers der Passagiersauerstoffmaske zugewandten Innenseite, ein Verschluss der Öffnung angeordnet. Dieser ist selbsttätig schließend ausgebildet, so dass die Benutzung der Passagiersauerstoffmaske nicht unnötig kompliziert wird, indem der Passagier den Öffnungsverschluss vor der Flüssigkeitsaufnahme öffnen und nach dem Trinken wieder verschließen muß.

Vorteilhaft ist es, an der Öffnung eine oder mehrere die Öffnung vorzugsweise innen verschließende Klappen vorzusehen. So kann am Innenrand der Öffnung eine federvorgespannte Klappe angeordnet sein, die beim Einführen eines Trinkrohrs von diesem verdrängt wird und in das Innere des Maskenkörpers aufklappt und so die Öffnung freigibt, beim Herausziehen des Trinkrohrs aber aufgrund der Federvorspannung wieder zuklappt und die Öffnung verschließt. Die Federvorspannung kann sowohl durch die Wahl geeigneter Materialien als auch durch den Einsatz entsprechender Federelemente verwirklicht werden.

Des Weiteren besteht die Möglichkeit, an der Innenseite der Öffnung eine Verschlussklappe anzuordnen, die an dem gesamten Umfang des Öffnungsrandes angebunden ist. Um ein Trinkrohr durch die Öffnung durchführen zu können, ist die die Öffnung abdeckende Fläche der Verschlussklappe derart radial geschlitzt, dass Verschlussklappensegmente gebildet werden, die ausgehend von dem Rand der Öffnung spitz auf den Öffnungsmittelpunkt zulaufen. Sind die Öffnungssegmente oder zumindest Abschnitte dieser Öffnungssegmente im Bereich der Anbindung an die Öffnung flexibel ausgebildet, so können sie beim Eindringen des Trinkrohrs in die Öffnung von diesem seitlich verdrängt werden und sich anschließend abdichtend gegen die Außenwand des Trinkrohrs anlegen.

Nachdem das Trinkrohr aus der Öffnung entfernt worden ist und die Passagiersauerstoffmaske nur noch zur Atemunterstützung genutzt wird, verschließt die Verschlussklappe die Öffnung luftdicht. Hierzu ist es zweckmäßig, dass der Öffnungsverschluss so ausgebildet ist, dass seine Schließkraft deutlich höher als die durch die Atemtätigkeit auf diesem Öffnungsverschluss wirkende Öffnungskraft ist. Auf diese Weise wird verhindert, dass der durch das Atmen erzeugte Unterdruck den Öffnungsverschluss von der Öffnung abhebt, so dass Außenluft durch die Öffnung in den Maskenkörper eindringen kann.

Zum selbsttätigen Verschließen der Öffnung sind auch alle weiteren Verschlusselemente einsetzbar, wie sie beispielsweise bei Luftmatratzen und Gummibooten Verwendung finden, die einerseits eine außenseitig erfolgende Durchdringung durch ein Trinkrohr und andererseits ein sicheres Verschließen der Öffnung nach dem Entfernen des Trinkrohres gewährleisten.

Nachfolgend ist die Erfindung anhand eines in der Zeichnung dargestellten Ausführungsbeispiels erläutert. Es zeigen:
- Fig. 1: eine perspektivische Skizze einer erfindungsgemäßen Passagiersauerstoffmaske und
- Fig. 2: eine perspektivische Skizze der in Fig. 1 dargestellten Passagiersauerstoffmaske mit einem durch die Öffnung durchgeführten Trinkrohr.

Die dargestellte Passagiersauerstoffmaske 2 weist einen aus einem flexiblen Kunststoff ausgebildeten kegelstumpfförmigen Maskenkörper 4 auf. Dessen größere Stirnfläche ist offen ausgebildet und bildet die Atemöffnung 6, die der Passagier im Beatmungsfall an sein Gesicht anlegt. An dem von der Atemöffnung 6 beabstandeten Ende des Maskenkörpers 4 ist eine geschlossene Stirnfläche 8 des Maskenkörpers angeordnet.

Diese Stirnfläche 8 weist eine zentrale Durchbrechung auf, die für den Anschluss 10 für die Sauerstoffversorgung vorgesehen ist. Die Sauerstoffversorgung ist in den Fig. durch einen an dem Anschluss 10 befestigten Sparbeutel 12 sowie einen an dem Sparbeutel 12 angebundenen Sauerstoffschlauch 14 angedeutet.

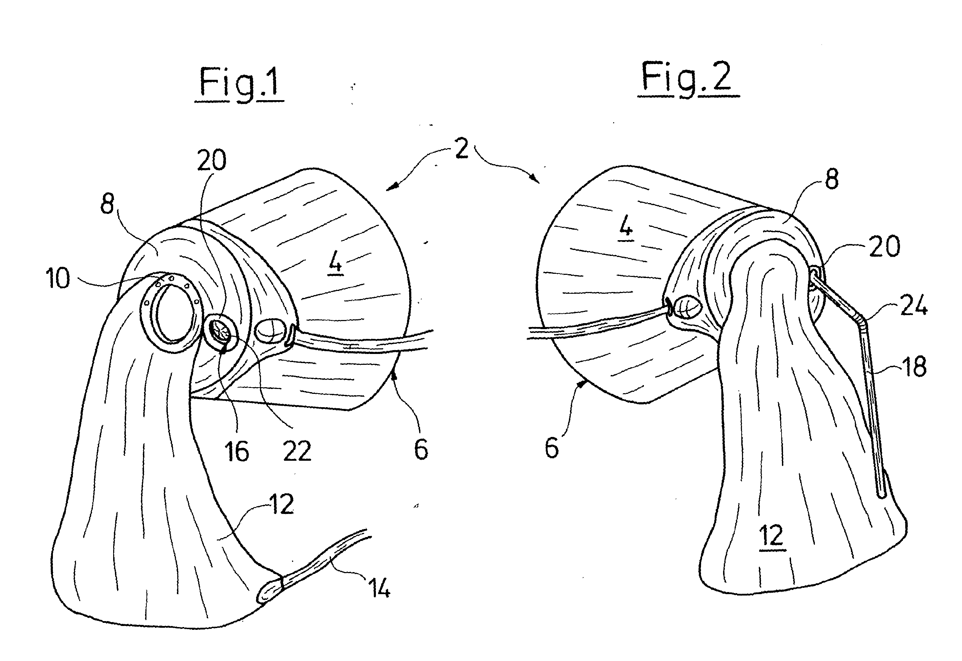

Neben dem Anschluss 10 für die Sauerstoffversorgung ist an der Stirnftäche 8 eine Öffnung 16 angeordnet. Diese Öffnung 16 dient zur Aufnahme eines Trinkrohrs 18, wie es in der Fig. 2 dargestellt ist. Der Außenrand 20 um die Öffnung 16 ist wulstförmig ausgebildet und ragt aus der Stirnfläche 8 hervor. Dies ermöglicht dem Passagier bei aufgesetzter Passagiersauerstoffmaske 2, ohne Sichtkontakt die Öffnung 16 zu ertasten, um das Trinkrohr 18 durch die Öffnung 16 in das Innere des Maskenkörpers 4 zu schieben. Des Weiteren wird die Öffnung 16 durch die wulstförmige Ausgestaltung des Außenrandes 20 versteift.

Bei der Überhöhung des Außenrandes 20 kann es sich sowohl um eine Materialverdickung der Stirnfläche 8 als auch um eine separate Fassung handeln, an der eine Verschlussklappe 22 zum Verschließen der Öffnung 16 angebunden ist.

Diese Verschlussklappe 22 ist innenseitig der Stirnfläche 8, d. h. auf der dem Gesicht zugewandten Seite der Stirnfläche 8 angeordnet und verschließt die Öffnung 16 bei nicht durchgeführtem Trinkrohr 18 luftdicht, so dass durch die Öffnung 16 keine Außenluft in das Innere der Passagiersauerstoffmaske 2 eindringen kann.

Die in Fig. 1 dargestellte Verschlussklappe 22 ist an dem gesamten Umfang der Öffnung 16 angebunden. Die die Öffnung 16 abdeckende Fläche der Verschlussklappe 22 ist fächerförmig geschlitzt, wobei die radial verlaufenden Schlitze im Zentrum der Öffnung 16 zusammentreffen. Die durch die Schlitzung entstehenden Verschlusssegmente der Verschlussklappe 22 sind zumindest teilweise, bevorzugt im Bereich der Anbindung an die Öffnung 16, flexibel ausgebildet, so dass sie beim Durchführen des Trinkrohrs 18, verdrängt durch das Trinkrohr 18, auseinander klappen und so den Weg für das Trinkrohr 18 freigeben und gleichzeitig den Maskenkörper gegenüber dem Trinkrohr 18 abdichten. Dabei zwingt die Schließkraft der Segmente der Verschlussklappe 22 diese gegen die Außenwandung des Trinkrohrs 18, so dass der Zwischenraum zwischen Trinkrohr 18 und Öffnung 16 durch die Segmente verschlossen wird. Auf die gleiche Weise verschließen die Segmente der Verschlussklappe 22 die Öffnung 16 nach dem Entfernen des Trinkrohrs 18.

Die Fig. 2 zeigt die Passagiersauerstoffmaske 2 mit einem Trinkrohr 18, welches durch die Öffnung 16 durchgeführt ist. Dieses Trinkrohr 18 weist einen Bereich 24 auf, der so ausgebildet ist, dass das Trinkrohr 18 abgebogen werden kann, um das von dem Maskenkörper entfernte Ende ohne Abknicken des Trinkrohrs 18 besser in ein (nicht dargestelltes) Trinkgefäß einführen zu können.

### Bezugszeichen

- 2: Passagiersauerstoffmaske
- 4: Maskenkörper
- 6: Atemöffnung
- 8: Stirnfläche
- 10: Anschluss
- 12: Sparbeutel
- 14: Schlauch
- 16: Öffnung
- 18: Trinkrohr
- 20: Außenrand
- 22: Verschlussklappe
- 24: Bereich

## Patentansprüche

1. Passagiersauerstoffmaske (2) für ein Flugzeug, mit einem zur Anlage an das Gesicht bestimmten und in bestimmungsgemäßer Position Mund und Nase übergreifenden Maskenkörper (4), **dadurch gekennzeichnet, dass** eine Durchführung (16) für ein Trinkrohr (18) vorgesehen ist.

2. Passagiersauerstoffmaske (2) nach Anspruch 1, **dadurch gekennzeichnet, dass** die Durchführung (16) durch eine Öffnung (16) gebildet ist.

3. Passagiersauerstoffmaske (2) nach einem der vorangehenden Ansprüche, **dadurch gekennzeichnet, dass** die Öffnung (16) selbsttätig schließend ausgebildet ist.

4. Passagiersauerstoffmaske (2) nach einem der vorangehenden Ansprüche, **dadurch gekennzeichnet, dass** an der Öffnung (16) eine oder mehrere die Öffnung (16) vorzugsweise innen verschließende Klappen (22) vorgesehen sind.

5. Passagiersauerstoffmaske (2) nach einem der vorangehenden Ansprüche, **dadurch gekennzeichnet, dass** der Öffnungsverschluss (22) so ausgebildet ist, dass seine Schließkraft deutlich höher als die durch die Atemtätigkeit auf diesen Öffnungsverschluss (22) wirkende Öffnungskraft ist.

6. Passagiersauerstoffmaske (2) für ein Flugzeug mit einer Öffnung (16) und einem Trinkrohr (18), welches durch die Öffnung (16) durchführbar ist.
